# FASCICULE DE BREVET EUROPEEN

(11) **EP 1 568 877 B1**
(45) Date de publication et mention de la délivrance du brevet: **04.05.2011**
(21) Numéro de dépôt: 05075714.5
(22) Date de dépôt: 19.12.2000
(51) Int. Cl.: F02K 9/46, F02K 9/50, F04B 17/04, F04B 43/04, F04B 43/067, F02K 9/44

(54) **Système et procédé d'alimentation d'au moins un propulseur-fusée**
Verfahren und System zur Treibstoffzufuhr für mindestens ein Raketentriebwerk
System and method for feeding at least one rocket motor

(30) Priorité: 21.12.1999 FR 9916149
(43) Date de publication de la demande: 31.08.2005
(62) Demande divisionnaire de: 00988958.5
(73) Titulaire: CENTRE NATIONAL D'ETUDES SPATIALES, 75001 Paris (FR)
(72) Inventeur: Gibek, Isabelle, 31240 L'Union (FR); Vannier, Jean-Claude, 92240 Malakoff (FR); Dugue, François, 31450 Pompertuzat (FR)
(74) Mandataire: Cabinet BARRE LAFORGUE & associés

(56) Documents cités:
- US-A- 3 088 406
- US-A- 4 696 160

## Description

L'invention concerne un système et un procédé d'alimentation en ergol liquide d'au moins un propulseur -notamment les propulseurs de contrôle d'attitude ou de manoeuvre- d'un engin aérien ou spatial tel qu'un satellite artificiel.

Les propulseurs de contrôle d'attitude ou de manoeuvre d'un engin aérien ou spatial doivent pouvoir être alimentés de façon intermittente, à partir d'un réservoir d'ergol -notamment un monergol tel que l'hydrazine-pressurisé par un gaz neutre tel que l'azote sous une pression initiale qui est typiquement de l'ordre de 2MPa à 2,5MPa. Cette alimentation par réservoir sous pression permet d'alimenter les propulseurs rapidement et à la demande, à tout moment. Au fur et à mesure du vol, le réservoir s'épuise en ergol et la pression de sortie fournie aux propulseurs diminue donc jusqu'à une pression minimum, de l'ordre de 0,55MPa, pour laquelle on considère que le réservoir est vide.

Cette chute de pression nuit au rendement des propulseurs, qui est en effet optimum pour une pression d'admission prédéterminée, mais ne peut être constant sur une plage aussi étendue de pression. Cette variation de rendement et de performances des propulseurs au cours du vol pose plusieurs problèmes. En premier lieu, elle nécessite de prévoir une quantité d'ergol plus importante que celle qui serait nécessaire, à énergie fournie égale. De surcroît, le fait d'utiliser un réservoir pressurisé alimentant directement les propulseurs imposant une pression minimale en fin de vie de valeur relativement importante (0,55MPa), se traduit par un réservoir de volume et de masse importants. En outre, elle rend plus difficile le contrôle automatique de l'engin puisque les signaux de commande des propulseurs -notamment leur durée d'allumage- pour obtenir un effet donné, varient selon leur rendement. En outre, les performances des propulseurs se dégradent au cours du vol, et la durée des manoeuvres de l'engin s'allonge et la consommation en ergol pour chaque manoeuvre peut augmenter. En outre, les propulseurs s'usent plus rapidement en fonctionnant à basse pression.

Pour pallier ces inconvénients, dans certains engins spatiaux dans lesquels les propulseurs doivent présenter des performances au moins sensiblement constantes pendant une durée donnée, on embarque des réservoirs complémentaires de gaz neutre pressurisé à haute pression permettant de rétablir la pression dans le réservoir d'ergol pressurisé au fur et à mesure de la consommation. Cette solution est envisageable pour les engins spatiaux de grandes dimensions (satellites géostationnaires, sondes spatiales planétaires ou autres). Elle ne peut néanmoins pas être envisagée dans le cas d'engins de petites tailles, dans lesquels la surcharge due aux réservoirs complémentaires de gaz neutre serait rédhibitoire.

Dans tous les cas, il est reconnu que le fait d'adopter un réservoir d'ergol pressurisé alimentant directement les propulseurs nécessite de surdimensionner l'ensemble du système de propulsion.

A l'inverse, les propulseurs à fonctionnement unique et continu, tels que les propulseurs des lanceurs spatiaux, sont alimentés par l'intermédiaire d'une turbopompe entraînée par les gaz brûlés, et qui fournit une pression constante d'ergol aux propulseurs. Une telle solution n'est pas adaptée dans le cas de propulseurs à fonctionnement intermittent devant être alimentés rapidement à la demande, compte tenu notamment de la durée prohibitive de lancement et d'arrêt de la turbopompe, et des valeurs de débit et pression requises. En outre, elle entraîne un poids, une complexité et un coût inutiles comparativement à la seule surcharge d'ergol nécessaire pour compenser la baisse de rendement d'un système à réservoir pressurisé.

Par ailleurs, il est considéré que les deux solutions connues consistant à utiliser soit un système à réservoir pressurisé alimentant directement les propulseurs, soit un système à pompe d'alimentation, s'excluent mutuellement dans la mesure où le réservoir pressurisé induit en lui-même une surcharge de masse inerte relativement importante et supprime l'intérêt d'utiliser une pompe (puisqu'il suffit d'embarquer une quantité suffisante d'ergol), et, à l'inverse, l'usage d'une pompe rend inutile l'emploi d'un réservoir pressurisé puisque l'ergol peut être pompé d'un réservoir basse pression présentant une masse inerte beaucoup plus faible.

Ainsi, US-5026259 décrit un système miniaturisé de pressurisation permettant de stocker un monergol à basse pression (0,35MPa à 1MPa) et de le fournir à haute pression aux propulseurs grâce à une pompe différentielle à piston alternatif alimentée par un générateur de gaz chaud transformant le monergol en gaz chaud motorisant la pompe. La pressurisation est obtenue par une boucle fermée instable associée à un limiteur de pression. Un accumulateur de grande dimension est prévu en parallèle aux propulseurs à la sortie de la pompe pour lisser les variations de pression fournies par la pompe. Cette solution a aussi pour inconvénient d'utiliser une partie de l'ergol pour la pressurisation et donc de nuire au rendement global de la propulsion tout en augmentant la masse due aux pièces mécaniques de la propulsion (pompe, manifold, générateur de gaz...), d'autant que la fourniture d'un débit au moins sensiblement continu de monergol à haute pression nécessite de doubler le système de pressurisation. Par ailleurs, la quantité d'ergol nécessaire à la pressurisation est d'autant plus importante que la pression dans le réservoir diminue au cours du vol, et les performances du générateur de gaz chaud, dont le fonctionnement est lié à la réaction chimique de dégradation du monergol, sont difficiles à maîtriser. Ainsi, il est difficile de déterminer avec précision la quantité de monergol à embarquer en fonction de la durée de vol requise et des variations d'utilisation des propulseurs. Avec une telle solution le contrôle automatique de l'engin spatial est relativement complexe.

De même, US-4.696.160 décrit un système d'alimentation d'un propulseur en ergols liquides comprenant des réservoirs d'ergols à basse pression et des pompes actionnées par solénoïdes fournissant les ergols au propulseur via des vannes d'injection actionnées par la pression. L'électropompe à solénoïde décrite dans ce document n'est pas compatible avec les contraintes de poids, d'encombrement et de puissance requises à bord d'un engin aérien ou spatial et n'est pas adaptée au pompage d'un monergol tel que l'hydrazine. En particulier, une telle électropompe nécessite un solénoïde de grandes dimensions, de poids important, et à forte consommation électrique pour une pression de sortie donnée. En pratique, une telle électropompe à solénoïde ne peut pas être réellement utilisée pour l'alimentation en ergol à une pression de l'ordre de 2 MPa à 2,5 MPa d'un propulseur d'engin aérien ou spatial tel qu'un microsatellite -notamment un microsatellite de communication-. En outre, la montée en pression à chaque démarrage de la pompe décrite dans ce document est trop lente pour assurer un fonctionnement correct du propulseur, notamment dans le cas d'un propulseur de contrôle d'attitude.

L'invention vise donc à pallier ces inconvénients en proposant un système et un procédé d'alimentation perfectionnés permettant d'obtenir un gain en terme de poids et surtout, en volume, de l'ensemble du système de propulsion, à capacité de manoeuvre semblable, ou, à volume égal, d'obtenir une capacité de manoeuvre plus importante.

L'invention vise en particulier à permettre de piloter aisément le fonctionnement des propulseurs au cours du vol de l'engin et à faciliter le contrôle automatique de l'engin, et ce de façon relativement simple, économique, et sans surcharge pondérale prohibitive.

L'invention vise aussi en particulier à proposer un système et un procédé d'alimentation adaptés à toutes sortes d'engins et de profils d'utilisation des propulseurs, prévisibles ou imprévisibles (fonctionnement intermittent avec une fréquence régulière ou, au contraire, très irrégulière, fonctionnement discontinu ou continu...).

L'invention vise en particulier à proposer un système et un procédé adaptés à l'alimentation de propulseurs, tels que des propulseurs de contrôle d'attitude ou de manoeuvre, en un monergol tel que l'hydrazine.

L'invention vise plus particulièrement à proposer un système et un procédé d'alimentation des propulseurs d'un engin aérien ou spatial de petite taille -notamment un microsatellite ou un minisatellite-.

Pour ce faire, l'invention concerne un système d'alimentation en ergol liquide d'au moins un propulseur d'un engin aérien ou spatial tel qu'un satellite artificiel, comprenant un réservoir principal d'ergol liquide pressurisé à une pression initiale Po par un gaz neutre, et doté d'au moins une sortie pour l'ergol liquide destiné à alimenter le(les) propulseur(s), comprenant entre le réservoir principal et le(les) propulseur(s) :
- une électropompe adaptée pour recevoir l'ergol liquide issu du réservoir principal sous une pression variant au cours du vol entre Po et une pression Pmin prédéterminée pour laquelle le réservoir principal est considéré vide d'ergol liquide, cette électropompe étant aussi adaptée pour fournir l'ergol liquide sous pression,
- au moins un réservoir secondaire de volume variable inférieur à celui du réservoir principal, ce réservoir secondaire comprenant des moyens de rappel pressurisant le liquide qu'il contient à une pression Pa qui varie avec le volume de liquide qu'il contient, ce réservoir secondaire étant adapté pour recevoir l'ergol liquide fourni par l'électropompe et alimenter en ergol liquide le(les) propulseur(s) sous une pression correspondant à la pression Pa qui règne dans ce réservoir secondaire,
- des moyens de mesure de la pression Pa qui règne dans le réservoir secondaire,
- un automatisme de commande de l'électropompe adapté pour déclencher son fonctionnement lorsque la pression Pa mesurée dans le réservoir secondaire devient inférieure à une pression Pamin prédéterminée et interrompre son fonctionnement lorsque la pression Pa mesurée dans le réservoir secondaire atteint une valeur Pamax prédéterminée, de sorte que le(les) propulseur(s) est(sont) alimenté(s) en ergol liquide sous une pression qui reste toujours comprise, au cours du vol, entre Pamin et Pamax.

Avantageusement et selon l'invention, l'ergol liquide est un monergol tel que l'hydrazine. L'invention concerne plus particulièrement un système caractérisé en ce que l'électropompe est de type volumétrique et en ce que plusieurs - notamment tous les - propulseurs sont alimentés en ergol liquide à partir du même réservoir secondaire et de cette électropompe.

L'invention s'étend aussi à un procédé mis en oeuvre dans un système selon l'invention.

L'invention concerne un procédé d'alimentation en ergol liquide d'au moins un propulseur d'un engin aérien ou spatial tel qu'un satellite artificiel, à partir d'un réservoir principal d'ergol liquide pressurisé à une pression initiale Po par un gaz neutre, et doté d'au moins une sortie pour l'ergol liquide destiné à alimenter le(les) propulseur(s),
caractérisé en ce que :
- on interpose entre le réservoir principal et le(les) propulseur(s) au moins un réservoir secondaire de volume variable inférieur à celui du réservoir principal, ce réservoir secondaire comprenant des moyens de rappel pressurisant le liquide qu'il contient à une pression Pa qui varie avec le volume de liquide qu'il contient, ce réservoir secondaire étant adapté pour recevoir l'ergol liquide pompé du réservoir principal sous pression et alimenter en ergol liquide le(les) propulseur(s) sous une pression correspondant à la pression Pa qui règne dans ce réservoir secondaire,
- on mesure la pression Pa qui règne dans le réservoir secondaire,
- on pompe l'ergol liquide du réservoir principal dans le réservoir secondaire lorsque la pression Pa mesurée dans le réservoir secondaire devient inférieure à une pression Pamin prédéterminée et on interrompt ce pompage lorsque la pression Pa mesurée dans le réservoir secondaire atteint une valeur Pamax prédéterminée, de sorte qu'on alimente le(les) propulseur(s) en ergol liquide sous une pression qui reste toujours comprise, au cours du vol, entre Pamin et Pamax.

Le système et le procédé d'alimentation selon l'invention permettent en pratique d'obtenir un gain important en poids, et surtout en volume, à capacité de manoeuvre semblable, ou un gain important en capacité de manoeuvre, à volume semblable. Ils sont en particulier et avantageusement applicables pour l'alimentation des propulseurs de contrôle d'attitude et/ou de manoeuvre d'un engin aérien ou spatial. En particulier, le fait que la pression d'alimentation des propulseurs reste au moins sensiblement constante permet d'optimiser les performances des propulseurs, qui restent constantes, sans avoir à embarquer des réservoirs complémentaires de gaz neutre. La plus grande partie de l'ergol du réservoir principal peut être utilisé, ce qui augmente, à masse inerte constante, le volume utile de ce réservoir. La consommation en ergol et la durée de chaque manoeuvre restent constantes, et les propulseurs s'usent moins. La consommation spécifique des propulseurs étant constante et optimale, la quantité d'ergol à embarquer est réduite. De surcroît, l'électropompe peut présenter des performances, et des caractéristiques notamment en terme de débit et pression fournis, poids et encombrement, procurant un gain global important sur l'ensemble du système d'alimentation.

Avantageusement et selon l'invention, on utilise une électropompe volumétrique et on alimente plusieurs propulseurs à partir du même réservoir secondaire et de cette électropompe.

L'invention vise aussi à proposer un système et un procédé d'alimentation tels que mentionnés ci-dessus, et dans lesquels on utilise une électropompe dont le volume et le poids sont inférieurs au gain total en volume et en terme de poids -notamment en volume et en poids d'ergol et des réservoirs-obtenu par rapport à une alimentation du(des) propulseur(s) directement à partir d'un réservoir principal d'ergol pressurisé.

L'invention concerne aussi un système d'alimentation, un procédé d'alimentation, caractérisés en combinaison par tout ou partie des caractéristiques mentionnées ci-dessus ou ci-après.

D'autres buts, caractéristiques et avantages de l'invention apparaîtront à la lecture de la description suivante qui se réfère aux figures annexées illustrant à titre d'exemples non limitatifs des modes de réalisation de l'invention, et dans lesquelles :
- la figure 1 est un schéma d'un système d'alimentation selon l'invention,
- la figure 2 est un organigramme d'un procédé d'alimentation selon l'invention.

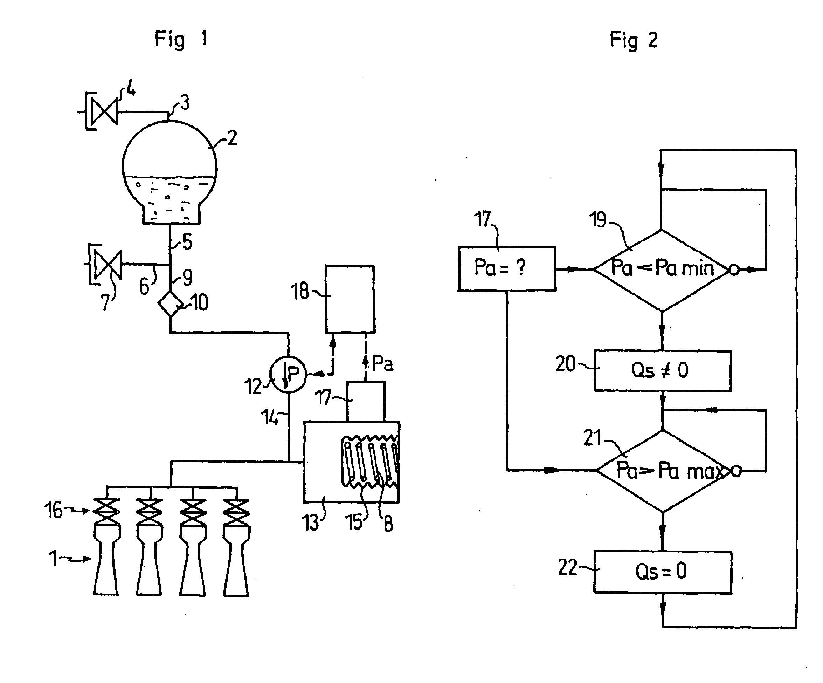

La figure 1 représente un système d'alimentation selon l'invention en monergol liquide des propulseurs 1 d'un engin aérien ou spatial tel qu'un satellite artificiel -notamment un microsatellite ou un minisatellite-. Ce système comprend un réservoir principal 2 contenant une réserve de monergol liquide -notamment de l'hydrazine- pressurisé à une pression Pr, dont la valeur initiale est Po par un gaz neutre tel que de l'azote alimenté sous pression dans le réservoir 2. Le réservoir 2 principal est globalement sphérique et comprend une entrée 3 de pressurisation dotée d'une vanne de pressurisation 4 et un orifice 5 d'entrée sortie d'ergol, diamétralement opposée à l'entrée 3 de pressurisation. Sur cet orifice 5 est connectée une conduite 6 dotée d'une vanne 7 de remplissage et de vidange d'ergol. L'orifice 5 est également relié à une conduite d'alimentation 9 fournissant le liquide issu du réservoir principal 2 à un filtre 10, puis à une électropompe 12 qui délivre un débit de liquide à une pression de refoulement Ps vers un réservoir secondaire 13 et des propulseurs 1.

Ce réservoir secondaire 13 a un volume fixe inférieur à celui du réservoir principal 2. Le volume de ce réservoir secondaire 13 est déterminé notamment en fonction du débit nécessaire aux propulseurs 1 et du temps de réponse au démarrage de l'électropompe 12. Par exemple, le volume du réservoir principal 2 est compris entre 1 ℓ et 100 ℓ, et le volume du réservoir secondaire 13 est compris entre 1cm3 et 10cm3. Le réservoir secondaire 13 est connecté en parallèle à la sortie 14 de l'électropompe 12 et est formé d'une enceinte indéformable close renfermant un soufflet 15 (ou autre organe déformable) rappelé à l'encontre de la pression régnant dans cette enceinte par des moyens 8 de rappel tels qu'un ressort de compression, dans le sens d'une diminution du volume utile du réservoir secondaire 13. En variante, ces moyens 8 de rappel peuvent être formés d'un gaz neutre pressurisé renfermé dans le soufflet 15, comme dans le réservoir principal 2.

Le réservoir secondaire 13 est directement connecté d'une part à la sortie 14 de l'électropompe 12, et, d'autre part, aux vannes de commande 16 individuelles de chacun des propulseurs 1. Un capteur de pression 17 est associé au réservoir secondaire 13 de façon à pouvoir mesurer la pression Pa qui règne au sein du réservoir secondaire 13 et qui correspond à la pression du liquide pouvant être fourni aux propulseurs 1 par ce réservoir secondaire 13.

Le réservoir secondaire 13 forme donc un réservoir tampon de petite capacité entre le réservoir principal 2 et les propulseurs 1, et ce réservoir 13 est maintenu pressurisé à une pression prédéterminée par l'électropompe 12 et les moyens 8 de rappel, au fur et à mesure de la demande en ergol par les propulseurs 1.

Un automatisme de commande 18 permet de commander le fonctionnement de l'électropompe 12. Cet automatisme de commande 18 est adapté pour déclencher le fonctionnement de l'électropompe 12 lorsque la pression Pa mesurée dans le réservoir secondaire 13 devient inférieure à une pression Pamin prédéterminée. L'automatisme 18 est également adapté pour interrompre le fonctionnement de l'électropompe 12 lorsque la pression Pa mesurée dans le réservoir secondaire 13 atteint une valeur Pamax prédéterminée, de sorte que les propulseurs 1 sont alimentés en monergol liquide par le réservoir secondaire 13 et/ou l'électropompe 1 sous une pression qui reste toujours comprise, au cours du vol de l'engin, entre Pamin et Pamax. Les moyens 8 de rappel sont tarés pour que la pression Pa dans le réservoir secondaire 13 puisse prendre une valeur comprise entre Pamin et Pamax lorsque l'électropompe 12 est en fonctionnement.

La figure 2 représente un organigramme simplifié d'un procédé d'alimentation mis en oeuvre dans un tel système, par l'automatisme de commande 18. Lors de l'étape 19 de test, on examine si la pression Pa mesurée par le capteur 17 est ou non inférieure à la pression Pamin, qui correspond à la pression minimale d'alimentation des propulseurs 1. Si tel est le cas, on exécute l'étape 20 d'allumage de l'électropompe 12 qui délivre au réservoir secondaire 13 un débit de liquide Qs non nul sous une pression de refoulement Ps déterminée par les moyens 8 de rappel, comprise entre Pamin et Pamax selon le taux de remplissage du réservoir secondaire 13. On examine ensuite, lors de l'étape 21, si la pression Pa fournie par le capteur 17 est ou non supérieure à une valeur prédéterminée Pamax correspondant à la pression maximum qui doit régner dans le réservoir secondaire 13. Si tel est le cas, on exécute l'étape 22 d'extinction de l'électropompe 12 qui ne fournit plus de liquide (Qs=0). Après cette étape 22 d'extinction, on exécute à nouveau l'étape 19 de test. Si, lors de l'étape 19 de test, on constate que la pression Pa régnant dans le réservoir secondaire 13 n'est pas inférieure à Pamin, on boucle cette étape en permanence. De même, si, lors de l'étape 21, on constate que la pression qui règne Pa dans le réservoir secondaire 13 n'est pas supérieure à Pamax, on boucle cette étape 21 de test en permanence.

Ainsi, quelle que soit la valeur de la pression fournie en sortie 5 du réservoir principal 2 au-dessus d'une pression minimum Pmin de l'ordre de 0,1MPa, (qui peut être aussi faible que la pression limite de début de cavitation de l'électropompe 12) la pression du liquide dans le réservoir secondaire 13 sera toujours comprise entre Pamin et Pamax, de sorte que les propulseurs 1, alimentés à partir du même réservoir secondaire 13 et/ou de l'électropompe 12, recevront le liquide sous une pression de valeur moyenne au moins sensiblement constante (comprise entre Pamin et Pamax) permettant d'optimiser leur rendement et leur fonctionnement.

L'électropompe 12 n'est active que lorsque l'un ou plusieurs des propulseurs 1 requiert ou a requis un débit de liquide. Elle est adaptée pour pouvoir délivrer un débit de liquide suffisant pour l'alimentation de tous les propulseurs 1 connectés directement sur sa sortie 14 et au réservoir secondaire 13. Lorsqu'aucun propulseur 1 n'est actif, sa pression de refoulement Ps est égale, aux pertes de charges près, à la pression Pa qui règne dans le réservoir secondaire 13. Cela reste vrai lorsque les propulseurs 1 sont actifs dans la mesure où le débit Qs est supérieur à la somme des débits d'alimentation de tous les propulseurs.

A partir d'une certaine quantité d'ergol consommé par les propulseurs 1 reliés au réservoir secondaire 13, ce réservoir secondaire 13 s'épuise, puis lorsque la pression atteint la valeur Pamin, l'électropompe 12 démarre et fournit tout le débit nécessaire.

Le réservoir secondaire 13 qui est un réservoir de volume pressurisé par les moyens 8 de rappel, a pour fonction de permettre une connection de l'électropompe 12 volumétrique fournissant un débit constant Qs, aux propulseurs 1 dont la demande en débit est variable selon qu'un (ou plusieurs) propulseur(s) 1 est(sont) actif(s).

Le volume du réservoir secondaire 13 détermine la périodicité de déclenchement de l'électropompe 12, en fonction du débit fourni aux propulseurs 1.

Pour assurer que les propulseurs 1 puissent être tous alimentés en permanence le débit Qs fourni par l'électropompe 12 doit être supérieur à la somme des débits d'alimentation des différents propulseurs 1 reliés à l'électropompe 12 et au réservoir secondaire 13. De la sorte, même lorsque tous les propulseurs 1 sont en fonctionnement, l'électropompe 12 aura un fonctionnement intermittent, commandé par l'automatisme de commande 18 selon les variations de la pression Pa au sein du réservoir secondaire 13, entre Pamin et Pamax.

De préférence, le débit Qs fourni par l'électropompe 12 est du même ordre (légèrement supérieur) au débit total d'alimentation de tous les propulseurs 1.

Les valeurs de Pamin et Pamax sont déterminées pour encadrer la pression nominale d'alimentation Pe des propulseurs 1 qui est en générale comprise entre 2 MPa et 2,5 MPa (Pamin ≤ Pe ≤ Pamax). Par exemple, pour une pression nominale d'alimentation Pe de l'ordre de 2,2 Mpa, on choisit Pamin de l'ordre de 2,1 MPa et Pamax de l'ordre de 2,3 MPa. De préférence, la différence Pamax-Pamin représente de l'ordre de 5 % à 10 % la valeur moyenne (Pamax + Pamin)/2, qui est elle-même de l'ordre de Pe.

## Revendications

1. Système d'alimentation en ergol liquide d'au moins un propulseur (1) d'un engin aérien ou spatial tel qu'un satellite artificiel, comprenant un réservoir principal (2) d'ergol liquide pressurisé à une pression initiale Po par un gaz neutre, et doté d'au moins une sortie (5) pour l'ergol liquide destiné à alimenter le(les) propulseur(s) (1),
comprenant entre le réservoir principal (2) et le(les) propulseur(s) (1) :
- une électropompe (12) adaptée pour recevoir l'ergol liquide issu du réservoir principal (2) sous une pression variant au cours du vol entre Po et une pression Pmin prédéterminée pour laquelle le réservoir principal (2) est considéré vide d'ergol liquide, cette électropompe (12) étant aussi adaptée pour fournir l'ergol liquide sous pression,
- au moins un réservoir secondaire (13) de volume variable inférieur à celui du réservoir principal (2), ce réservoir secondaire (13), comprenant des moyens (8) de rappel pressurisant le liquide qu'il contient à une pression Pa qui varie avec le volume de liquide qu'il contient, ce réservoir secondaire (13) étant adapté pour recevoir l'ergol liquide fourni par l'électropompe (12) et alimenter en ergol liquide le(les) propulseur(s) (1) sous une pression correspondant à la pression Pa qui règne dans ce réservoir secondaire (13),
- des moyens de mesure de la pression Pa qui règne dans le réservoir secondaire (13),
- un automatisme de commande (18) de l'électropompe (12) adapté pour déclencher son fonctionnement lorsque la pression Pa mesurée dans le réservoir secondaire (13) devient inférieure à une pression Pamin prédéterminée et interrompre son fonctionnement lorsque la pression Pa mesurée dans le réservoir secondaire (13) atteint une valeur Pamax prédéterminée, de sorte que le(les) propulseur(s) (1) est(sont) alimenté(s) en ergol liquide sous une pression qui reste toujours comprise, au cours du vol, entre Pamin et Pamax.

2. Système selon la revendication 1, **caractérisé en ce que** l'électropompe est de type volumétrique, et **en ce que** plusieurs propulseurs (1) sont alimentés en ergol liquide à partir du même réservoir secondaire (13) et de cette électropompe (12).

3. Système selon l'une des revendications 1 ou 2, **caractérisé en ce que** l'ergol liquide est un monergol tel que l'hydrazine.

4. Procédé d'alimentation en ergol liquide d'au moins un propulseur (1) d'un engin aérien ou spatial tel qu'un satellite artificiel à partir d'un réservoir principal (2) d'ergol liquide pressurisé à une pression initiale Po par un gaz neutre, et doté d'au moins une sortie (5) pour l'ergol liquide destiné à alimenter le(les) propulseur(s) (1),
**caractérisé en ce que** :
- on interpose entre le réservoir principal (2) et le(les) propulseur(s) (1), au moins un réservoir secondaire (13) de volume variable inférieur à celui du réservoir principal (2), comprenant des moyens (8) de rappel pressurisant le liquide qu'il contient à une pression Pa qui varie avec le volume de liquide qu'il contient, ce réservoir secondaire (13) étant adapté pour recevoir l'ergol liquide pompé du réservoir principal (2) sous pression et alimenter en ergol liquide le(les) propulseur(s) (1) sous une pression correspondant à la pression Pa qui règne dans ce réservoir secondaire (13),
- on mesure la pression Pa qui règne dans le réservoir secondaire (13),
- on pompe l'ergol liquide du réservoir principal (2) dans le réservoir secondaire (13) lorsque la pression Pa mesurée dans le réservoir secondaire (13) devient inférieure à une pression Pamin prédéterminée et on interrompt ce pompage lorsque la pression Pa mesurée dans le réservoir secondaire (13) atteint une valeur Pamax prédéterminée, de sorte qu'on alimente le(les) propulseur(s) (1) en ergol liquide sous une pression qui reste toujours comprise, au cours du vol, entre Pamin et Pamax.

5. Procédé selon la revendication 4, **caractérisé en ce qu'**on utilise une électropompe (12) volumétrique et **en ce qu'**on alimente plusieurs propulseurs (1) à partir du même réservoir secondaire (13) et de cette électropompe (12).

## Claims

1. System for feeding liquid propellant to at least one thruster (1) of an aircraft or spacecraft such as an artificial satellite, comprising a main tank (2) for liquid propellant which is pressurised at an initial pressure Po by a neutral gas and is equipped with at least one outlet (5) for the liquid propellant that is to be fed to the thruster(s) (1),
comprising between the main tank (2) and the thruster(s) (1):
- an electrically-driven pump (12) suitable for receiving the liquid propellant coming from the main tank (2) under a pressure which varies during the flight between Po and a predetermined pressure Pmin at which the main tank (2) is considered to be empty of liquid propellant, the electrically-driven pump (12) also being suitable for supplying the liquid propellant under pressure,
- at least one secondary tank (13) which has a variable volume smaller than that of the main tank (2), the secondary tank (13) comprising return means (8) which pressurise the liquid contained therein at a pressure Pa which varies with the volume of liquid contained therein, the secondary tank (13) being suitable for receiving the liquid propellant supplied by the electrically-driven pump (12) and for feeding liquid propellant to the thruster(s) (1) under a pressure corresponding to the pressure Pa prevailing in the secondary tank (13),
- means for measuring the pressure Pa prevailing in the secondary tank (13),
- an automatic control system (18) for the electrically-driven pump (12) suitable for starting operation thereof when the pressure Pa measured in the secondary tank (13) becomes less than a predetermined pressure Pamin, and for stopping operation thereof when the pressure Pa measured in the secondary tank (13) reaches a predetermined value Pamax, so that the thruster(s) (1) is (are) fed with liquid propellant under a pressure which, during the flight, always remains between Pamin and Pamax.

2. System according to claim 1, **characterised in that** the electrically-driven pump is of the volumetric type, and **in that** a plurality of thrusters (1) are fed with liquid propellant from the same secondary tank (13) and by that electrically-driven pump (12).

3. System according to either claim 1 or claim 2, **characterised in that** the liquid propellant is a monopropellant such as hydrazine.

4. Method for feeding liquid propellant to at least one thruster (1) of an aircraft or spacecraft such as an artificial satellite from a main tank (2) for liquid propellant which is pressurised at an initial pressure Po by a neutral gas and is equipped with at least one outlet (5) for the liquid propellant that is to be fed to the thruster(s) (1),
**characterised in that**:
- there is interposed between the main tank (2) and the thruster(s) (1) at least one secondary tank (13) which has a variable volume smaller than that of the main tank (2) and comprises return means (8) which pressurise the liquid contained therein at a pressure Pa which varies with the volume of liquid contained therein, the secondary tank (13) being suitable for receiving the liquid propellant pumped from the main tank (2) under pressure and for supplying liquid propellant to the thruster(s) (1) under a pressure corresponding to the pressure Pa prevailing in the secondary tank (13),
- the pressure Pa prevailing in the secondary tank (13) is measured,
- the liquid propellant is pumped from the main tank (2) into the secondary tank (13) when the pressure Pa measured in the secondary tank (13) becomes lower than a predetermined pressure Pamin, and pumping is stopped when the pressure Pa measured in the secondary tank (13) reaches a predetermined value Pamax, so that the thruster(s) (1) are fed with liquid propellant under a pressure which, during the flight, always remains between Pamin and Pamax.

5. Method according to claim 4, **characterised in that** a volumetric electrically-driven pump (12) is used, and **in that** a plurality of thruster(s) (1) are fed from the same secondary tank (13) and by that electrically-driven pump (12).

## Patentansprüche

1. System für die Versorgung mit flüssigem Ergol von zumindest einem Triebwerk (1) eines Luft- oder Raumfahrzeugs, wie zum Beispiel eines künstlichen Satelliten, das einen druckhaltenen Haupttank (2) mit flüssigem Ergol unter Initialdruck Po durch ein neutrales Gas umfasst und zumindest mit einem Austritt (5) für das flüssige Ergol versehen ist, das das Triebwerk/die Triebwerke (1) versorgen soll, und zwischen dem Haupttank (2) und dem/den Triebwerk/en (1) folgende Baugruppen umfasst:
- Eine Elektropumpe (12), die geeignet ist, das aus dem Haupttank (2) kommende flüssige Ergol unter einem Druck aufzunehmen, der im Verlauf des Flugs zwischen Po und einem vorbestimmten Druck Pmin variiert, bei dem der Haupttank (2) als frei von flüssigem Ergol betrachtet wird, wobei diese Elektropumpe auch geeignet ist, das flüssige Ergol unter Druck zu liefern,
- zumindest einen Zweittank (13) mit variablem Volumen geringer als dasjenige des Haupttanks (2), wobei dieser Zweittank (13) Mittel (8) für den Rückruf unter Druckbeaufschlagung der darin enthaltenen Flüssigkeit bei einem Druck Pa umfasst, der je nach dem darin enthaltenen Flüssigkeitsvolumen variiert, wobei dieser Zweittank (13) geeignet ist, das von der Elektropumpe (12) gelieferte flüssige Ergol aufzunehmen und das/die Triebwerk/e (1) mit flüssigem Ergol unter einem Druck zu versorgen, der dem in diesem Zweittank (13) herrschenden Druck Pa entspricht,
- Mittel für die Messung des Drucks Pa, der im Zweittank (13) herrscht,
- eine Steuerautomatik (18) der Elektropumpe (12), die geeignet ist, ihren Betrieb auszulösen, wenn der im Zweittank (13) gemessene Druck Pa unter einen vorbestimmten Druck Pamin absinkt und ihren Betrieb zu unterbrechen, wenn der im Zweittank (13) gemessene Druck Pa einen vorbestimmten Wert Pamax erreicht, sodass das/die Triebwerk/e (1) mit flüssigem Ergol unter einem Druck versorgt wird/werden, der im Verlauf des Flugs immer zwischen Pamin und Pamax bleibt.

2. System nach Anspruch 1, **dadurch gekennzeichnet, dass** die Elektropumpe vom Typ einer Zumesspumpe ist, und dadurch, dass mehrere Triebwerke (1) mit flüssigem Ergol aus dem gleichen Zweittank (13) und mit dieser Elektropumpe (12) versorgt werden.

3. System nach einem beliebigen der vorstehenden Ansprüche 1 oder 2, **dadurch gekennzeichnet, dass** das flüssige Ergol ein Monergol wie zum Beispiel das Hydrazin ist.

4. Verfahren für die Versorgung mit flüssigem Ergol von zumindest einem Triebwerk (1) eines Luft-oder Raumfahrzeugs, wie zum Beispiel eines künstlichen Satelliten, ab einem druckhaltenen Haupttank (2) mit flüssigem Ergol unter Initialdruck Po durch ein neutrales Gas, und der zumindest mit einem Austritt (5) für das flüssige Ergol versehen ist, das das Triebwerk/die Triebwerke (1) versorgen soll,
**dadurch gekennzeichnet, dass**:
- zwischen dem Haupttank (2) und dem/den Triebwerk/en (1) zumindest ein Zweittank (13) mit variablem Volumen geringer als dasjenige des Haupttanks (2) gesetzt wird, der Mittel (8) für den Rückruf unter Druckbeaufschlagung der darin enthaltenen Flüssigkeit bei einem Druck Pa umfasst, der je nach dem darin enthaltenen Flüssigkeitsvolumen variiert, wobei dieser Zweittank (13) geeignet ist, das vom Haupttank (2) unter Druck gepumpte flüssige Ergol aufzunehmen und das/die Triebwerk/e (1) mit flüssigem Ergol unter einem Druck zu versorgen, der dem in diesem Zweittank (13) herrschenden Druck Pa entspricht,
- der Druck Pa gemessen wird, der im Zweittank (13) herrscht,
- das flüssige Ergol des Haupttanks (2) in den Zweittank (13) gepumpt wird, wenn der im Zweittank (13) gemessene Druck Pa unter einen vorbestimmten Druck Pamin absinkt, und dass dieses Pumpen unterbrochen wird, wenn der im Zweittank (13) gemessene Druck Pa einen vorbestimmten Wert Pamax erreicht, sodass das/die Triebwerk/e (1) mit flüssigem Ergol unter einem Druck versorgt wird/werden, der im Verlauf des Flugs immer zwischen Pamin und Pamax bleibt.

5. System nach Anspruch 4, **dadurch gekennzeichnet, dass** eine Elektropumpe (12) als Zumesspumpe eingesetzt wird, und dadurch, dass mehrere Triebwerke (1) aus dem gleichen Zweittank (13) und mit dieser Elektropumpe (12) versorgt werden.
